# EUROPEAN PATENT APPLICATION

(11) **EP 2 894 481 A1**
(43) Date of publication of application: **15.07.2015**
(21) Application number: 13832060.1
(22) Date of filing: 08.08.2013
(51) Int. Cl.: G01P 3/50, G01C 22/00

(54) **ELECTRONIC DEVICE AND PROGRAM**

(30) Priority: 03.09.2012 JP 2012193255; 03.09.2012 JP 2012193256
(71) Applicant: Seiko Instruments Inc., Chiba-shi, Chiba 261-8507 (JP); ASICS Corporation, Kobe-shi Hyogo 650-8555 (JP)
(72) Inventor: TAKAKURA Akira, Chiba-shi Chiba 261-8507 (JP); SHIMIZU Hiroshi, Chiba-shi Chiba 261-8507 (JP); IHASHI Tomohiro, Chiba-shi Chiba 261-8507 (JP); TSUBATA Keisuke, Chiba-shi Chiba 261-8507 (JP); TAGAWA Takehiro, Kobe-shi Hyogo 650-8555 (JP); SHINAYAMA Ryota, Kobe-shi Hyogo 650-8555 (JP)
(74) Representative: Miller Sturt Kenyon
(86) International application number: PCT/JP2013/071515
(87) International publication number: WO 2014/034404

(57) **Abstract**

A wristwatch (100) includes: a storing unit (103) that stores relational data indicating a relationship between a traveling pitch, which is the number of steps taken per predetermined amount of time, and a traveling speed which is a running speed or a walking speed; and a processing unit (101) that calculates a traveling speed of a user from a measured traveling pitch of the user based on the relational data stored in the storing unit (103) which indicates the relationship between the traveling pitch and the traveling speed.

## Description

### Field of the Invention

The present invention relates to an electronic apparatus and a program.

Priority is claimed on Japanese Patent Application No. 2012-193255, filed September 3, 2012 and Japanese Patent Application No. 2012-193256, filed September 3, 2012, the content of which is incorporated herein by reference.

### Related Art

In the related art, a mobile electronic apparatus to which an acceleration sensor and the like are mounted to calculate a running speed or a walking speed of a user is known (for example, refer to Patent Document 1). Such an apparatus includes timekeeping means and step number measuring means, in which an average speed of the use is calculated based on a set step length, a kept time, and the number of steps, and the calculated average speed is notified to the user.

### Reference Document

### Patent Document

[Patent Document 1] Japanese Unexamined Utility Model Application, First Publication No. H2-59419

### Disclosure of the Invention

### Problems to be Solved by the Invention

However, in the technique described in Patent Document 1, it is necessary to input a unique step length value of the user in advance. When the user does not know his/her own step length value, the user cannot input the step length value. Therefore, an operation of detecting the step length value of the user using a method is required. In addition, the step length value may vary depending on the traveling status (whether the user walks or runs, and the speed thereof), and thus an error is likely to occur in the speed calculated based on only step length data.

Therefore, according to some aspects of the present invention, an electronic apparatus capable of calculating a traveling speed of the user with high accuracy, and a program therefor can be provided.

### Methods for Solving the Problem

According to some aspects of the present invention, there is provided an electronic apparatus including: a storing unit that stores relational data indicating a relationship between a traveling pitch, which is the number of steps taken per predetermined amount of time, and a traveling speed which is a running speed or a walking speed; and a speed calculating unit that calculates a traveling speed of a user from a measured traveling pitch of the user based on the relational data stored in the storing unit.

In addition, according to another aspect of the present invention, in the electronic apparatus, the storing unit stores a plurality of the relational data, and the speed calculating unit switches the relational data according to a predetermined condition to calculate the traveling speed.

In addition, according to another aspect of the present invention, in the electronic apparatus, the predetermined condition is a traveling status of the user, and the storing unit stores the relational data corresponding to each traveling status.

In addition, according to another aspect of the present invention, the electronic apparatus further includes: an acceleration sensor that detects an acceleration; and a traveling detection unit that measures the traveling pitch of the user based on the acceleration detected by the acceleration sensor, in which the speed calculating unit determines the traveling status of the user based on the traveling pitch measured by the traveling detection unit, and calculates the traveling speed of the user from the traveling pitch, which is measured by the traveling detection unit, based on the relational data corresponding to the determined traveling status.

In addition, according to another aspect of the present invention, the electronic apparatus further includes: an acceleration sensor that detects an acceleration; and a traveling detection unit that measures the traveling pitch of the user based on the acceleration detected by the acceleration sensor, in which the speed calculating unit determines the traveling status of the user based on the acceleration detected by the acceleration sensor, and calculates the traveling speed of the user from the traveling pitch, which is measured by the traveling detection unit, based on the relational data corresponding to the determined traveling status.

In addition, according to another aspect of the present invention, the electronic apparatus further includes: an acceleration sensor that detects an acceleration; and a traveling detection unit that measures the traveling pitch of the user based on the acceleration detected by the acceleration sensor, in which the speed calculating unit calculates the traveling speed of the user from the traveling pitch, which is measured by the traveling detection unit, based on an arbitrary piece of the relational data, determines the traveling status of the user based on the calculated traveling speed, and calculates the traveling speed of the user from the traveling pitch, which is measured by the traveling detection unit, based on the relational data corresponding to the determined traveling status.

In addition, according to another aspect of the present invention, the electronic apparatus further includes: an input unit that receives an input of a body height or information relating to the body height, in which the speed calculating unit uses the body height or the information relating to the body height, whose input is received by the input unit, to determine the traveling status.

In addition, according to another aspect of the present invention, the electronic apparatus further includes: an input unit to which the traveling status of the user is input, in which the speed calculating unit calculates the traveling speed of the user from the measured traveling pitch based on the relational data corresponding to the traveling status which is input to the input unit.

In addition, according to another aspect of the present invention, in the electronic apparatus, the predetermined condition is a gender, the electronic apparatus further includes an input unit to which the gender is input, the storing unit stores the relational data corresponding to each gender, and the speed calculating unit calculates the traveling speed of the user from the measured traveling pitch based on the relational data corresponding to the gender which is input to the input unit.

In addition, according to another aspect of the present invention, the electronic apparatus further includes a traveling distance calculating unit that calculates a traveling distance, which is a running distance or a walking distance of the user, based on the traveling speed calculated by the speed calculating unit.

In addition, according to another aspect of the present invention, the electronic apparatus further includes a pace calculating unit that calculates a traveling pace, which is a walking pace or a running pace of the user, based on the traveling speed calculated by the speed calculating unit.

In addition, according to another aspect of the present invention, in the electronic apparatus, the storing unit stores table data indicating a relationship between the traveling pitch and the traveling speed.

In addition, according to another aspect of the present invention, in the electronic apparatus, the speed calculating unit calculates a traveling pace, which is a running pace or a walking pace of the user, instead of the traveling speed of the user.

In addition, according to another aspect of the present invention, the electronic apparatus further includes an input unit that receives an input of a body height or information relating to the body height, in which the storing unit stores the relational data indicating a relationship between a body height or information relating to the body height, a traveling pitch which is the number of steps taken per predetermined amount of time, and a traveling speed which is a running speed or a walking speed, and the speed calculating unit calculates the traveling speed of the user from the body height or the information relating to the body height, whose input is received by the input unit, and the measured traveling pitch of the user based on the relational data stored in the stored unit.

In addition, according to another aspect of the present invention, there is provided a program causing a computer to execute the following steps of: reading relational data corresponding to a predetermined condition from a storing unit that stores a plurality of the relational data indicating a relationship between a traveling pitch, which is the number of steps taken per predetermined amount of time, and a traveling speed which is a running speed or a walking speed; and calculating a traveling speed of a user from a measured traveling pitch of the user based on the read relational data.

### Effects of the Invention

According to some aspects of the present invention, the relational data indicating a relationship between the traveling pitch and the traveling speed is stored in advance, and the traveling speed of the user is calculated from the measured traveling pitch of the user based on the relational data. As a result, a change in step length caused by a variation in traveling pitch is absorbed, and the traveling speed can be calculated with higher accuracy.

### Brief Description of the Drawings

FIG. 1 is a block diagram illustrating a configuration of a wristwatch according to an embodiment of the present invention.
FIG. 2 is a diagram illustrating plot data indicating a relationship between a traveling pitch and a traveling speed according to a first embodiment of the present invention.
FIG. 3 is a schematic diagram illustrating a data structure and a data example of a relational data table which is stored in a storing unit according to the first embodiment of the present invention.
FIG. 4 is a diagram illustrating a method of calculating a traveling speed from a traveling pitch according to the first embodiment of the present invention.
FIG. 5 is a diagram illustrating a method of calculating a traveling speed from a traveling pitch according to the first embodiment of the present invention.
FIG. 6 is a flowchart illustrating the procedure of a speed calculating process which is executed by a wristwatch according to the first embodiment of the present invention.
FIG. 7 is a schematic diagram illustrating a data structure and a data example of a relational data table which is stored in a storing unit according to a second embodiment of the present invention.
FIG. 8 is a flowchart illustrating the procedure of a speed calculating process which is executed by a wristwatch according to the second embodiment of the present invention.

### Embodiments of the Invention

### (First Embodiment)

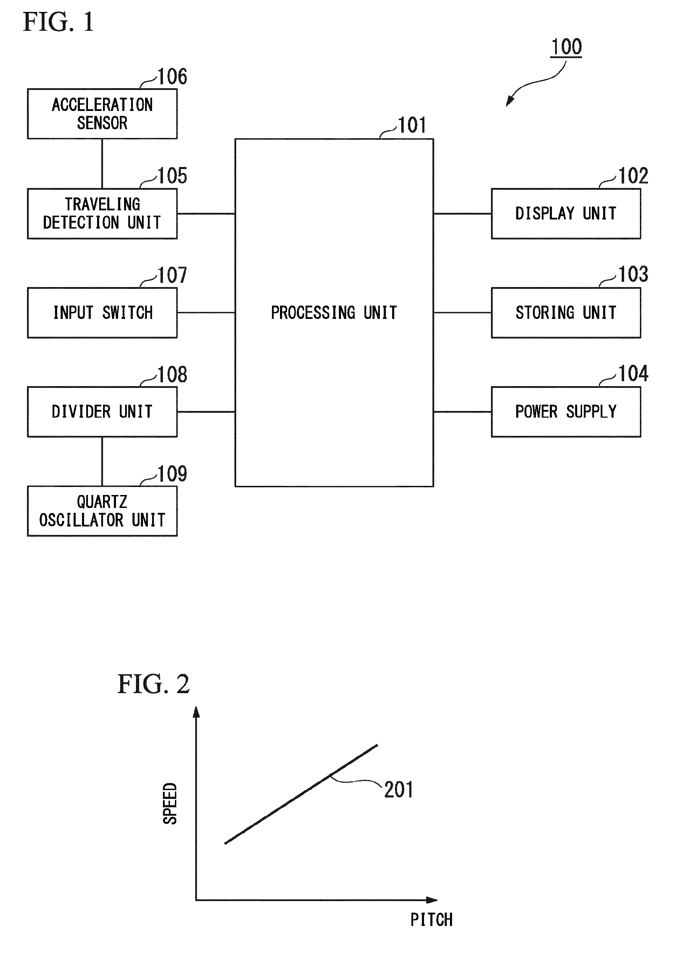

Hereinafter, a first embodiment of the present invention will be described with reference to the drawings. In the embodiment, an example of a wristwatch will be described as an example of an electronic apparatus. FIG. 1 is a block diagram illustrating a configuration of a wristwatch 100 according to the embodiment. The wristwatch 100 is an electronic watch that measures a traveling pitch of the user, calculates a traveling speed of the user from the measured traveling pitch, and displays the calculated traveling speed. The traveling pitch is the number of steps taken per predetermined amount of time (for example, 1 minute). The traveling speed is a running speed or a walking speed. In the example illustrated in the drawing, the wristwatch 100 includes a processing unit 101 (speed calculating unit, traveling distance calculating unit, pace calculating unit), a display unit 102, a storing unit 103, a power supply 104, a traveling detection unit 105, an acceleration sensor 106, an input switch 107 (input unit), a divider unit 108, and a quartz oscillator unit 109.

The processing unit 101 is a central processing unit that controls each unit included in the wristwatch 100. For example, the processing unit 101 calculates a traveling speed of the user from a traveling pitch of the user, which is measured by the traveling detection unit 105, based on relational data stored in the storing unit 103. The relational data is the data indicating a relationship between the traveling pitch and the traveling speed. In addition, the processing unit 101 calculates a traveling distance of the user based on the calculated traveling speed. The traveling distance is a walking distance or a running distance. In addition, the processing unit 101 calculates a traveling pace based on the calculated traveling speed. The traveling pace is a walking pace or a running pace and is the inverse number of the traveling speed. In addition, the processing unit 101 displays information relating to traveling on the display unit 102. Examples of the information relating to traveling include a traveling time, the number of steps, the traveling pitch, the traveling speed, the traveling distance, and the traveling pace. The traveling time is a walking time or a running time.

Further, the processing unit 101 may realize a speed calculating function, which is a function of the wristwatch 100, by executing a program for calculating the traveling speed. Specifically, the program for calculating the traveling speed may be stored in the storing unit 103 or a memory (not illustrated), and the processing unit 101 may realize the speed calculating function by reading and executing the program. In this case, it can be considered that the wristwatch 100 includes the speed calculating unit that calculates the speed.

Further, the processing unit 101 may realize a traveling detection function, which is a function of the wristwatch 100, by executing a program for measuring the traveling pitch and detecting the traveling. Specifically, the program for measuring the traveling pitch and detecting the traveling may be stored in the storing unit 103 or a memory (not illustrated), and the processing unit 101 may realize the traveling detection function by reading and executing the program. In this case, it can be considered that the wristwatch 100 includes the traveling detection unit that measures the traveling pitch and detects the traveling.

Further, the processing unit 101 may realize a traveling distance calculating function, which is a function of the wristwatch 100, by executing a program for calculating the traveling distance based on the traveling speed. Specifically, the program for calculating the traveling distance based on the traveling speed may be stored in the storing unit 103 or a memory (not illustrated), and the processing unit 101 may realize the traveling distance calculating function by reading and executing the program. In this case, it can be considered that the wristwatch 100 includes the traveling distance calculating unit that calculates the traveling distance based on the traveling speed.

Further, the processing unit 101 may realize a pace calculating function, which is a function of the wristwatch 100, by executing a program for calculating the running pace or the walking pace based on the traveling speed. Specifically, the program for calculating the running pace or the walking pace based on the traveling speed may be stored in the storing unit 103 or a memory (not illustrated), and the processing unit 101 may realize the pace calculating function by reading and executing the program. In this case, it can be considered that the wristwatch 100 includes the pace calculating unit that calculates the running pace or the walking pace based on the traveling speed.

The display unit 102 is, for example, a liquid crystal display and displays the clock time, information relating to the traveling, and the like. The storing unit 103 is configured of a ROM (Read Only memory) or a RAM (Random Access Memory) and stores relational data indicating a relationship between the traveling pitch and the traveling speed. The power supply 104 supplies electrical power to each unit included in the wristwatch 100.

The acceleration sensor 106 detects an acceleration. The traveling detection unit 105 measures the traveling pitch of the user based on the acceleration detected by the acceleration sensor 106. For example, the traveling detection unit 105 measures the traveling pitch of the user based on the acceleration (for example, information relating to landing) which is generated by a body movement of running or walking. Specifically, from the acceleration detected by the acceleration sensor 106, the traveling detection unit 105 detects a vibration of the body during walking or running to measure the number of steps. In addition, the traveling detection unit 105 measures the traveling pitch based on the measured traveling time and the measured number of steps.

The input switch 107 is configured of a switch capable of being manipulated from the outside and is the input unit that receives an input. For example, the input switch 107 receives an input of a traveling status (whether to be walking or running) of the user. In addition, the input switch 107 receives an input of a gender of the user. The quartz oscillator unit 109 outputs a signal having a predetermined frequency. The divider unit 108 divides the frequency of the output signal of the quartz oscillator unit 109 at a predetermined division ratio and outputs a reference clock signal for the processing unit 101 or a clock signal for timekeeping. The processing unit 101, the divider unit 108, and the quartz oscillator unit 109 are the timekeeping units for keeping the time. The timekeeping unit realizes a stopwatch function for keeping the traveling time of the user or a clock function for displaying the present clock time.

FIG. 2 is a diagram illustrating plot data indicating a relationship between the traveling pitch and the traveling speed. From the plot data 201 between the traveling pitch and the traveling speed illustrated in this drawing, it can be seen that there is a correlation between the traveling pitch and the traveling speed. For example, in general, when a person walks or runs, there are the following tendencies: the traveling pitch increases during a fast running (or walking) movement; and the traveling pitch decreases during a slow running (or walking) movement. Therefore, by preparing a predetermined relational expression, the traveling speed can be obtained from the traveling pitch. Accordingly, the storing unit 103 according to the embodiment stores relational data indicating a relationship between the traveling pitch and the traveling speed in advance.

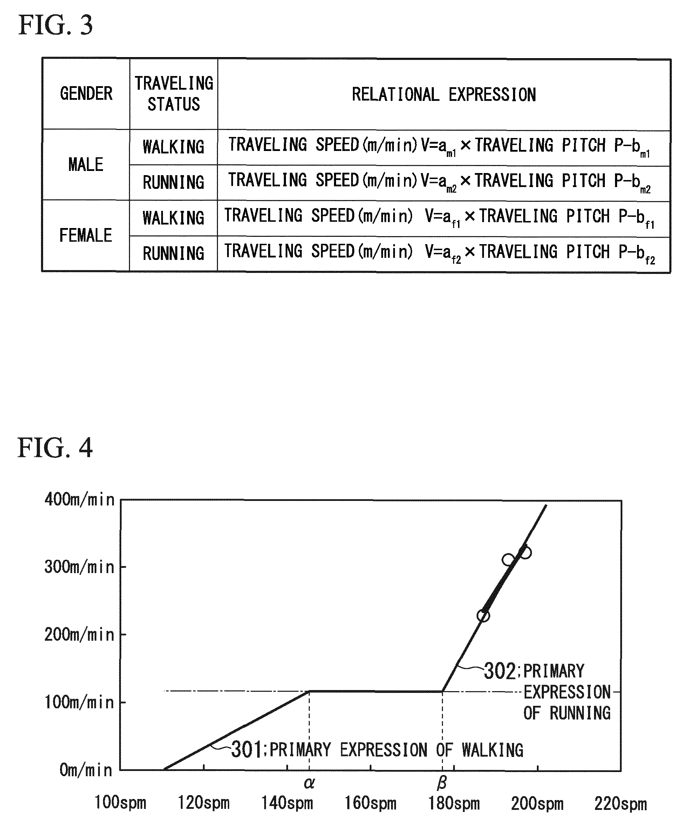

Next, the relational data indicating the relationship between the traveling pitch and the traveling speed, which is stored in the storing unit 103, will be described. FIG. 3 is a schematic diagram illustrating a data structure and a data example of a relational data table which is stored in the storing unit 103 according to the embodiment.

As illustrated in the drawing, the relational data table is the two-dimensional data table including rows and columns, and includes columns of the respective items including the gender, the traveling status, and the relational expression. Each row of this table is present for each set of the gender and the traveling status. The gender refers to the gender of the user which is female or male. The traveling status refers to the traveling status of the user which is walking or running. The relational expression refers to the primary expression "Traveling Speed V=(Gradient)×Traveling Pitch P-(Offset)" for calculating the traveling speed from the traveling pitch. For example, in a relational expression corresponding to the gender "Male" and the traveling status "Walking", a gradient is aₘ₁, and an offset is bₘ₁. In addition, in a relational expression corresponding to the gender "Male" and the traveling status "Running", a gradient is aₘ₂, and an offset is bₘ₂. In addition, in a relational expression corresponding to the gender "Female" and the traveling status "Walking", a gradient is an, and an offset is b_{f1}. In addition, in a relational expression corresponding to the gender "Female" and the traveling status "Walking", a gradient is a_{f2}, and an offset is b_{f2}.

Next, a method in which the processing unit 101 according to the embodiment calculates the traveling speed from the measured traveling pitch will be described. FIG. 4 is a diagram illustrating a method of calculating the traveling speed from the traveling pitch according to the embodiment. In a graph of this drawing, the horizonal axis represents the traveling pitch, and the vertical axis represents the traveling speed. In this drawing, a straight line 301 represents a relational expression corresponding to walking. In this drawing, a straight line 302 represents a relational expression corresponding to running. The processing unit 101 determines the traveling status (whether to be walking or running) of the user based on the traveling pitch detected by the traveling detection unit 105, and calculates the traveling speed based on the relational expression corresponding to the detected traveling status. Specifically, when the measured traveling pitch is less than a threshold value α, the processing unit 101 determines that the user walks, and calculates the traveling speed from the measured traveling pitch based on the relational expression corresponding to walking. In addition, when the measured traveling pitch is the threshold value α or more and a threshold value β or less, the processing unit 101 calculates the traveling speed by substituting α for the traveling pitch of the relational expression corresponding to walking. That is, the processing unit 101 maintains a fixed value while the measured traveling pitch is in the range from the threshold value α to the threshold value β. In addition, when the measured traveling pitch is more than the threshold value β, the processing unit 101 determines that the user runs, and calculates the traveling speed from the measured traveling pitch based on the relational expression corresponding to running.

For example, the threshold value α may be stored in the storing unit 103 in advance, or may be obtained from an input of the user or obtained from the outside of the wristwatch 100 using communication means (not illustrated). In addition, for example, the threshold value β can be calculated by executing the following Step 1 to Step 4.
(Step 1) A traveling speed A at an spm value of the threshold value α is calculated using the relational expression "Traveling Speed (m/min) V=aₘ₁×Traveling Pitch P-bₘ₁)" in which the traveling status is "Walking".
(Step 2) A traveling speed B at the spm value of the threshold value α is calculated using the relational expression "Traveling Speed (m/min) V=aₘ₂×Traveling Pitch P-bₘ₂)" in which the traveling status is "Running".
(Step 3) When the speed B is slower than the speed A, an spm value at the traveling speed of the threshold value α is calculated using the relational expression "Traveling Speed (m/min) V=aₘ₂×Traveling Pitch P-bₘ₂)" in which the traveling status is "Running", and this spm value is stored as an spm value of the threshold value β.
(Step 4) When the speed B is equal to or faster than the speed A, the spm value of the threshold value α is stored as the spm value of the threshold value β as it is. In this case, the threshold value α and the threshold value β have the same value (threshold value γ).

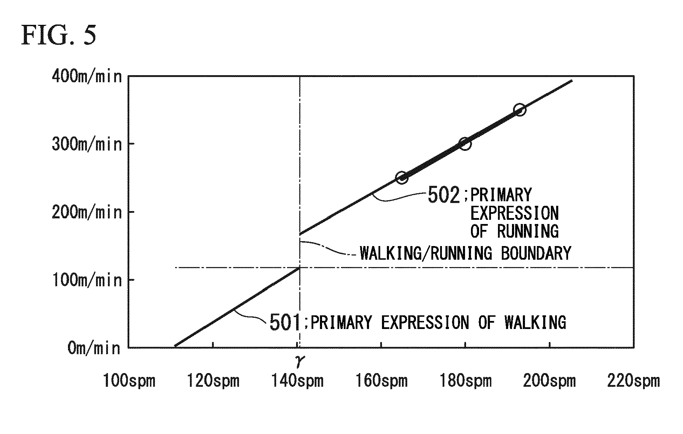

FIG. 5 is a diagram illustrating a method of calculating the traveling speed from the traveling pitch when the threshold value α and the threshold value β have the same value (threshold value γ) in the embodiment. In a graph of this drawing, the horizonal axis represents the traveling pitch, and the vertical axis represents the traveling speed. In this drawing, a straight line 501 represents a relational expression corresponding to walking. In this drawing, a straight line 502 represents a relational expression corresponding to running. Specifically, when the measured traveling pitch is the threshold value γ or less, the processing unit 101 determines that the user walks, and calculates the traveling speed from the measured traveling pitch based on the relational expression 501 corresponding to walking. In addition, when the measured traveling pitch is more than the threshold value γ, the processing unit 101 determines that the user runs, and calculates the traveling speed from the measured traveling pitch based on the relational expression 502 corresponding to running.

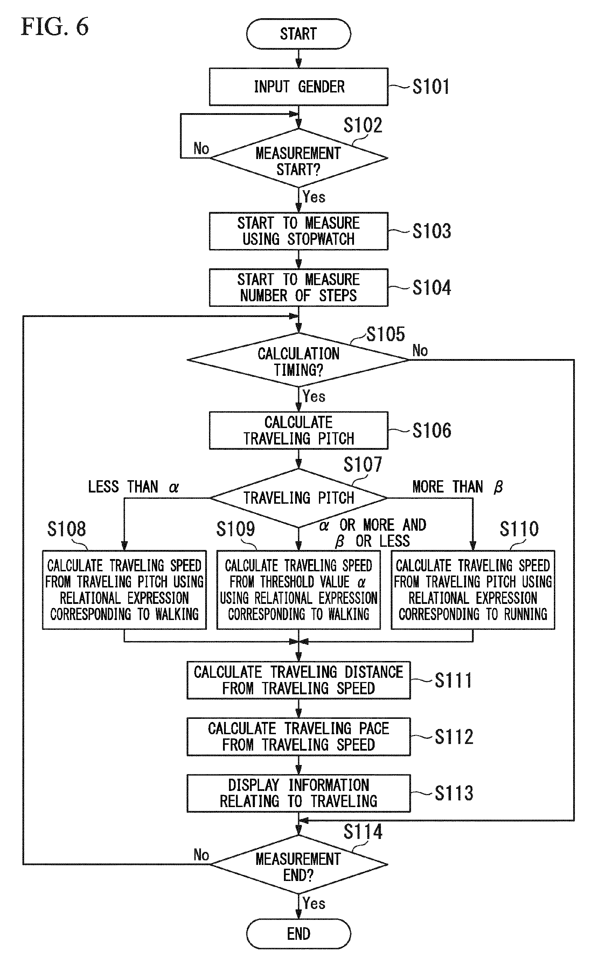

Next, a speed calculating process in which the wristwatch 100 according to the embodiment calculates the traveling speed from the traveling pitch will be described. FIG. 6 is a flowchart illustrating the procedure of a speed calculating process which is executed by the wristwatch 100 according to the embodiment.

(Step S101) The processing unit 101 displays the gender (male or female) on the display unit 102 to be selectable and receives an input of the selection of the gender. The user selects the gender through the input switch 107. Next, the process proceeds to Step S102.

(Step S102) The processing unit 101 determines whether or not an instruction to start the measurement is input from the input switch 107. When the instruction to start the measurement is input, the process proceeds to Step S103. When the instruction to start the measurement is not input, the process returns to Step S102.

(Step S103) The processing unit 101 starts to measure the traveling time using the stopwatch function. Next, the process proceeds to Step S104.

(Step S104) The processing unit 101 starts to measure the number of steps using the traveling detection unit 105. Next, the process proceeds to Step S105.

(Step S105) The processing unit 101 determines whether or not a calculation timing is reached. The calculation timing is the preset timing at which information relating to running is calculated, and is, for example, per second. When the calculation timing is reached, the processing unit 101 proceeds to Step S106. On the other hand, when the calculation timing is not reached, the processing unit 101 proceeds to Step S114.

(Step S106) The traveling detection unit 105 calculates the traveling pitch by dividing the measured number of steps by the measured traveling time. Next, the process proceeds to Step S107.

(Step S107) The processing unit 101 compares the traveling pitch calculated in Step S106 to a predetermined threshold value. When the traveling pitch is less than the threshold value α, the processing unit 101 proceeds to Step S108. In addition, when the traveling pitch is the threshold value α or more and the threshold value β or less, the processing unit 101 proceeds to Step S109. In addition, when the traveling pitch is more than the threshold value β, the processing unit 101 proceeds to Step S110.

(Step S108) The processing unit 101 calculates the traveling speed from the traveling pitch, which is calculated in Step S106, using the relational expression corresponding to walking. Specifically, the processing unit 101 reads the gender input in Step S101 and the relational expression corresponding to the traveling status "walking" from the storing unit 103, and substitutes the calculated traveling pitch into the read relational expression to calculate the traveling speed. Next, the process proceeds to Step S111.

(Step S109) The processing unit 101 calculates the traveling speed from the threshold value α using the relational expression corresponding to walking. Specifically, the processing unit 101 reads the gender input in Step S101 and the relational expression corresponding to the traveling status "walking" from the storing unit 103, and substitutes the threshold value α into the read relational expression to calculate the traveling speed. Next, the process proceeds to Step S111.

(Step S110) The processing unit 101 calculates the traveling speed from the traveling pitch, which is calculated in Step S106, using the relational expression corresponding to running. Specifically, the processing unit 101 reads the gender input in Step S101 and the relational expression corresponding to the traveling status "running" from the storing unit 103, and substitutes the calculated traveling pitch into the read relational expression to calculate the traveling speed. Next, the process proceeds to Step S111.

(Step S111) The processing unit 101 calculates the traveling distance by multiplying the calculated traveling speed by the measured time. Next, the process proceeds to Step S112.

(Step S112) The processing unit 101 calculates the traveling pace by calculating the inverse number of the calculated traveling speed. Next, the process proceeds to Step S113.

(Step S113) The processing unit 101 displays information relating to traveling on the display unit 102. The information relating to traveling includes the measured number of steps, the measured traveling time, the traveling pitch, the traveling speed, the traveling distance, and the traveling pace. Next, the process proceeds to Step S114.

(Step S114) The processing unit 101 determines whether or not an instruction to end timekeeping is input from the input switch 107. When the instruction to end the measurement is input, the processing unit 101 ends the speed calculating process. On the other hand, when the instruction to end the measurement is not input, the processing unit 101 returns to Step S105.

As described above, in the embodiment, the storing unit 103 stores the relational data indicating the relationship between the traveling pitch and the traveling speed in advance. The processing unit 101 calculates the traveling speed from the traveling pitch, which is measured by the traveling detection unit 105, based on the relational data stored in the storing unit 103. As a result, the traveling speed can be directly calculated from the measured traveling pitch without using a step length which is a fixed value. Therefore, the process highly corresponding to the running status (or walking status) can be performed, and the traveling speed can be calculated with few errors.

In addition, in the embodiment, the processing unit 101 switches the relational expressions according to a predetermined condition (the gender of the user and the traveling status of the user) to calculate the traveling speed. As a result, the relational expression corresponding to the gender and the traveling status of the user can be used, and thus the traveling speed can be calculated with higher accuracy.

### (Second Embodiment)

Hereinafter, a second embodiment of the present invention will be described with reference to the drawings. A wristwatch 100 according to this embodiment has the same configuration as that of the wristwatch 100 according to the first embodiment. Different points of this embodiment from the first embodiment are as follows. In the embodiment, the traveling speed is calculated using a relationship between the traveling pitch, a body height or information relating to the body height, and the traveling speed. In addition, in the embodiment, the body height or the information relating to the body height is used to determine the threshold value α.

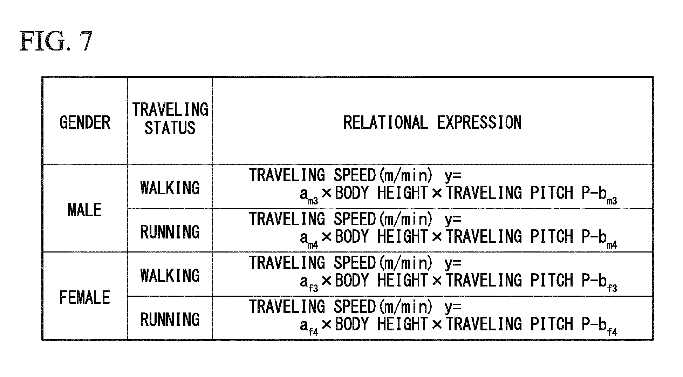

FIG. 7 is a schematic diagram illustrating a data structure and a data example of a relational data table which is stored in the storing unit 103 according to the embodiment. As illustrated in the drawing, the relational data table is the two-dimensional data table including rows and columns, and includes columns of the respective items including the gender, the traveling status, and the relational expression. Each row of this table is present for each set of the gender and the traveling status. The gender refers to the gender of the user which is female or male. The traveling status refers to the traveling status of the user which is walking or running. The relational expression refers to the primary expression "Traveling Speed y=(Gradient)×Body Height×Traveling Pitch P-(Offset)" for calculating the traveling speed from the body height and the traveling pitch. For example, in a relational expression corresponding to the gender "Male" and the traveling status "Walking", a gradient is aₘ₃, and an offset is bₘ₃. In addition, in a relational expression corresponding to the gender "Male" and the traveling status "Running", a gradient is aₘ₄, and an offset is bₘ₄. In addition, in a relational expression corresponding to the gender "Female" and the traveling status "Walking", a gradient is a_{f3}, and an offset is b_{f3}. In addition, in a relational expression corresponding to the gender "Female" and the traveling status "Walking", a gradient is a_{f4}, and an offset is b_{f4}. As the value used in the relational expression, the information relating to the body height may be used instead of the body height. Examples of the information relating to the body height include an inseam length and a physical constitution (S, M, L).

Next, a method in which the processing unit 101 according to the embodiment calculates the traveling speed from the measured traveling pitch will be described. A method of calculating the traveling speed from the measured traveling pitch is the same as that of the first embodiment. However, in the embodiment, the body height or the information relating to the body height is used to determine the threshold value α. For example, as the body height increases, the threshold value α increases, and as the body height decreases, the threshold value α decreases. In addition, for example, the threshold value α may be determined according to the traveling pitch and the body height or the information relating to the body height. In addition, for example, the threshold value α may be determined according to the measured acceleration and the body height or the information relating to the body height. In addition, for example, the threshold value α may be determined according to the measured traveling speed and the body height or the information relating to the body height. The threshold value α may be determined to increase as the body height increases.

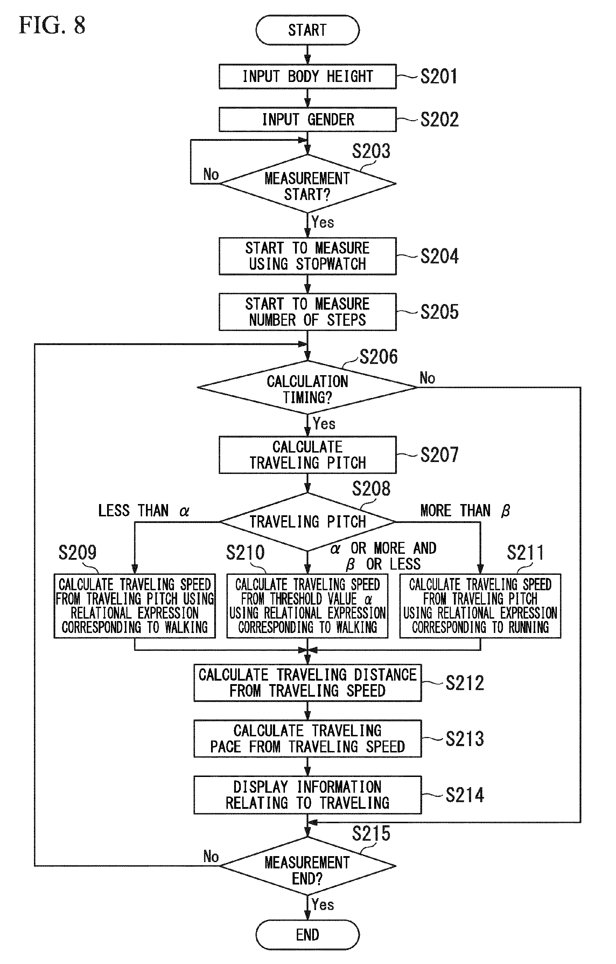

Next, a speed calculating process in which the wristwatch100 according to the embodiment calculates the traveling speed from the traveling pitch will be described. FIG. 8 is a flowchart illustrating the procedure of a speed calculating process which is executed by the wristwatch 100 according to the embodiment.

(Step S201) The processing unit 101 displays a screen input body height on the display unit 102 and receives an input of the body height. The user inputs the body height through the input switch 107. Next, the process proceeds to Step S202.

The processes of Step S202 to Step S208 are the same as those of Step S101 to Step S107 in the first embodiment.

(Step S209) The processing unit 101 calculates the traveling speed from the body height, whose input is received in the process of Step S201, and the traveling pitch, which is calculated in Step S207, using the relational expression corresponding to walking. Specifically, the processing unit 101 reads the gender input in Step S202 and the relational expression corresponding to the traveling status "walking" from the storing unit 103. Next, the processing unit 101 substitutes the body height, which is input in the process of Step S201, and the traveling pitch, which is calculated in the process of Step S207, into the read relational expression to calculate the traveling speed. Next, the process proceeds to Step S212.

(Step S210) The processing unit 101 calculates the traveling speed from the body height, whose input is received in the process of Step S201, and the threshold value α using the relational expression corresponding to walking. Specifically, the processing unit 101 reads the gender input in Step S202 and the relational expression corresponding to the traveling status "walking" from the storing unit 103. Next, the processing unit 101 substitutes the body height, whose input is received in the process of Step S201, and the threshold value α into the read relational expression to calculate the traveling speed. Next, the process proceeds to Step S212.

(Step S212) The processing unit 101 calculates the traveling speed from the body height, whose input is received in the process of Step S201, and the traveling pitch, which is calculated in Step S207, using the relational expression corresponding to running. Specifically, the processing unit 101 reads the gender input in Step S202 and the relational expression corresponding to the traveling status "running" from the storing unit 103. Next, the processing unit 101 substitutes the body height, whose input is received in the process of Step S201, and the traveling pitch, which is calculated in the process of Step S207, into the read relational expression to calculate the traveling speed. Next, the process proceeds to Step S212.

The processes of Step S212 to Step S215 are the same as those of Step S111 to Step S 114 in the first embodiment. In the process of Step S208, the threshold value α may be determined based on the body height or the information relating to the body height. In addition, the threshold value β may be determined based on the determined threshold value α.

As described above, in the embodiment, the storing unit 103 stores the relational data indicating the relationship between the body height or the information relating to the body height, the traveling pitch, and the traveling speed in advance. The processing unit 101 calculates the traveling speed from the input body height or the input information relating to the body height, and the traveling pitch, which is measured by the traveling detection unit 105, based on the relational data stored in the storing unit 103. As a result, the traveling speed can be directly calculated from the measured traveling pitch without using a step length which is a fixed value. Therefore, the process highly corresponding to the running status (or walking status) can be performed, and the traveling speed can be calculated with few errors.

In addition, in the embodiment, the processing unit 101 switche the relational expressions according to a predetermined condition (the gender of the user and the traveling status of the user) to calculate the traveling speed. In addition, the processing unit 101 determines the threshold value α to switch the relational expressions based on the body height or the information relating to the body height. As a result, the relational expression corresponding to the gender, the body height, and the traveling status of the user can be used, and thus the traveling speed can be calculated with higher accuracy.

A part or all of the functions of the respective units included in the wristwatches 100 according to the first embodiment and the second embodiment described above may be realized by recording a program for realizing these functions on a computer-readable recording medium and causing a computer system to read and execute this program recorded on the recording medium. The "computer system" described herein includes OS and hardware such as peripheral devices.

In addition, typically, the "computer-readable recording medium" includes portable mediums such as a flexible disc, a magneto-optic disc, a ROM, and a CD-ROM; and storages such as a hard disc built into a computer system, but is not necessarily limited thereto. Further, instead of the "computer-readable recording medium", the following mediums may be used: mediums on which a program is dynamically stored for a short period of time, for example, a network such as the Internet or a communication line such as a telephone line through which a program is transmitted; and mediums on which a program is stored for a predetermined amount of time, for example, a volatile memory which is built into a computer system functioning as a server or a client. In addition, the program may realize a part of the above-described functions or may realize the above-described functions in combination with a program stored in a computer system in advance.

Hereinabove, the plural embodiments of the present invention have been described. However, the present invention is not limited to the above-described plural embodiments, and various modifications can be added within a range not departing from the scope of the present invention.

For example, in the above-described embodiment, the processing unit 101 determines the traveling status of the user (whether to be walking or running) based on the measured traveling pitch, but the present invention is not limited thereto. For example, the processing unit 101 may determine the traveling status of the user based on the degree of the acceleration detected by the acceleration sensor 106. Specifically, when the acceleration detected by the acceleration sensor 106 is less than a threshold value g₁, the processing unit 101 determines that the user walks, and calculates the traveling speed of the user from the traveling pitch, which is measured by the traveling detection unit 105, based on the relational expression corresponding to walking. In addition, when the acceleration detected by the acceleration sensor 106 is more than a threshold value g₂ which is the threshold value g₁ or more, the processing unit 101 determines that the user walks, and calculates the traveling speed of the user from the traveling pitch, which is measured by the traveling detection unit 105, based on the relational expression corresponding to running. In addition, the body height or the information relating to the body height may be used to determine the threshold value g₁.

Alternatively, the processing unit 101 may calculate the traveling speed of the user from the traveling pitch measured by the traveling detection unit 105 based on an arbitrary expression of the relational expressions, and may determine the traveling status of the user based on the calculated on the traveling speed. Specifically, first, the processing unit 101 calculates the traveling speed of the user from the traveling pitch, which is measured by the traveling detection unit 105, based on the relational expression corresponding to walking. In addition, when the calculated traveling speed is faster than a predetermined value, the processing unit 101 determines that the user runs, and calculates the traveling speed of the user from the traveling pitch, which is measured by the traveling detection unit 105, based on the relational expression corresponding to running. When the calculated traveling speed is equal to or slower than the predetermined value, the processing unit 101 determines that the user walks. Alternatively, first, the processing unit 101 calculates the traveling speed of the user from the traveling pitch, which is measured by the traveling detection unit 105, based on the relational expression corresponding to running. In addition, when the calculated traveling speed is slower than a predetermined value, the processing unit 101 determines that the user walks, and calculates the traveling speed of the user from the traveling pitch, which is measured by the traveling detection unit 105, based on the relational expression corresponding to walking. In this case, when the calculated traveling speed is equal to or faster than the predetermined value, the processing unit 101 determines that the user runs. In addition, the body height or the information relating to the body height may be used to determine the predetermined value which is used to determine whether the user walks or runs.

In addition, in the above-described embodiments, the processing unit 101 automatically determines the traveling status (whether to be walking or running). However, the user may manually input the traveling status. In this case, the input switch 107 receives an input of a traveling status (whether to be walking or running) of the user. The processing unit 101 calculates the traveling speed of the user from the traveling pitch, which is measured by the traveling detection unit 105, based on the relational expression corresponding to the traveling status which is input through the input switch 107.

In addition, in the above-described embodiments, the relational expression indicating the relationship between the traveling pitch and the traveling speed is the primary expression, but the present invention is not limited thereto. For example, the relational expression indicating the relationship between the traveling pitch and the traveling speed may be a quadratic equation or a cubic expression.

In addition, in the above-described embodiments, the storing unit 103 stores the relational expression indicating the relationship between the traveling pitch and the traveling speed, but the present invention is not limited thereto. For example, as the relational data, the storing unit 103 may store table data indicating the relationship between the traveling pitch and the traveling speed.

In addition, in the above-described embodiments, the traveling detection unit 105 calculates the traveling pitch based on the traveling time and the measured number of steps, but the present invention is not limited thereto. The traveling pitch may be obtained using information relating to a running (or walking) signal which is detected by the acceleration sensor 106. For example, the traveling detection unit 105 may calculate the traveling pitch by measuring an interval (time interval) between steps.

In addition, in the above-described embodiments, the processing unit 101 calculates the traveling speed from the measured traveling pitch, but the present invention is not limited thereto. The processing unit 101 may calculate the traveling pace from the traveling pitch instead of the traveling speed.

In addition, in the above-described embodiments, the wristwatch 100 has been described as an example of the electronic apparatus. However, other electronic apparatuses such as a pedometer, a mobile phone, and a smart phone may be used as long as the user can carry them.

### Industrial Applicability

The electronic apparatus according to the present invention is applicable to a mobile electronic apparatus to which an acceleration sensor and the like are mounted to calculate a running speed or a walking speed of a user.

### Reference Symbol List

- 100: WRISTWATCH
- 101: PROCESSING UNIT
- 102: DISPLAY UNIT
- 103: STORING UNIT
- 104: POWER SUPPLY
- 105: TRAVELING DETECTION UNIT
- 106: ACCELERATION SENSOR
- 107: INPUT SWITCH
- 108: DIVIDER UNIT
- 109: QUARTZ OSCILLATOR UNIT

## Claims

1. An electronic apparatus comprising:
a storing unit that stores relational data indicating a relationship between a traveling pitch, which is the number of steps taken per predetermined amount of time, and a traveling speed which is a running speed or a walking speed; and
a speed calculating unit that calculates a traveling speed of a user from a measured traveling pitch of the user based on the relational data stored in the storing unit.

2. The electronic apparatus according to claim 1,
wherein the storing unit stores a plurality of the relational data, and
the speed calculating unit switches the relational data according to a predetermined condition to calculate the traveling speed.

3. The electronic apparatus according to claim 2,
wherein the predetermined condition is a traveling status of the user, and
the storing unit stores the relational data corresponding to each traveling status.

4. The electronic apparatus according to claim 3, further comprising:
an acceleration sensor that detects an acceleration; and
a traveling detection unit that measures the traveling pitch of the user based on the acceleration detected by the acceleration sensor,
wherein the speed calculating unit determines the traveling status of the user based on the traveling pitch measured by the traveling detection unit, and calculates the traveling speed of the user from the traveling pitch, which is measured by the traveling detection unit, based on the relational data corresponding to the determined traveling status.

5. The electronic apparatus according to claim 3, further comprising:
an acceleration sensor that detects an acceleration; and
a traveling detection unit that measures the traveling pitch of the user based on the acceleration detected by the acceleration sensor,
wherein the speed calculating unit determines the traveling status of the user based on the acceleration detected by the acceleration sensor, and calculates the traveling speed of the user from the traveling pitch, which is measured by the traveling detection unit, based on the relational data corresponding to the determined traveling status.

6. The electronic apparatus according to claim 3, further comprising:
an acceleration sensor that detects an acceleration; and
a traveling detection unit that measures the traveling pitch of the user based on the acceleration detected by the acceleration sensor,
wherein the speed calculating unit calculates the traveling speed of the user from the traveling pitch, which is measured by the traveling detection unit, based on an arbitrary piece of the relational data, determines the traveling status of the user based on the calculated traveling speed, and calculates the traveling speed of the user from the traveling pitch, which is measured by the traveling detection unit, based on the relational data corresponding to the determined traveling status.

7. The electronic apparatus according to any one of claims 4 to 6, further comprising:
an input unit that receives an input of a body height or information relating to the body height,
wherein the speed calculating unit uses the body height or the information relating to the body height, whose input is received by the input unit, to determine the traveling status.

8. The electronic apparatus according to claim 3, further comprising:
an input unit to which the traveling status of the user is input,
wherein the speed calculating unit calculates the traveling speed of the user from the measured traveling pitch based on the relational data corresponding to the traveling status which is input to the input unit.

9. The electronic apparatus according to any one of claims 2 to 8,
wherein the predetermined condition is a gender,
the electronic apparatus further comprises an input unit to which the gender is input, the storing unit stores the relational data corresponding to each gender, and
the speed calculating unit calculates the traveling speed of the user from the measured traveling pitch based on the relational data corresponding to the gender which is input to the input unit.

10. The electronic apparatus according to any one of claims 1 to 9, further comprising:
a traveling distance calculating unit that calculates a traveling distance, which is a running distance or a walking distance of the user, based on the traveling speed calculated by the speed calculating unit.

11. The electronic apparatus according to any one of claims to 10, further comprising:
a pace calculating unit that calculates a traveling pace, which is a walking pace or a running pace of the user, based on the traveling speed calculated by the speed calculating unit.

12. The electronic apparatus according to any one of claims 1 to 11,
wherein the storing unit stores table data indicating a relationship between the traveling pitch and the traveling speed.

13. The electronic apparatus according to any one of claims 1 to 12,
wherein the speed calculating unit calculates a traveling pace, which is a running pace or a walking pace of the user, instead of the traveling speed of the user.

14. The electronic apparatus according to any one of claims 1 to 13, further comprising:
an input unit that receives an input of a body height or information relating to the body height,
wherein the storing unit stores the relational data indicating a relationship between a body height or information relating to the body height, a traveling pitch which is the number of steps taken per predetermined amount of time, and a traveling speed which is a running speed or a walking speed, and
the speed calculating unit calculates the traveling speed of the user from the body height or the information relating to the body height, whose input is received by the input unit, and the measured traveling pitch of the user based on the relational data stored in the stored unit.

15. A program causing a computer to execute the following steps of:
reading relational data corresponding to a predetermined condition from a storing unit that stores a plurality of the relational data indicating a relationship between a traveling pitch, which is the number of steps taken per predetermined amount of time, and a traveling speed which is a running speed or a walking speed; and
calculating a traveling speed of a user from a measured traveling pitch of the user based on the read relational data.
